(19) Europäisches Patentamt
European Patent Office
Office européen des brevets

(11) Numéro de publication : **0 287 448 B1**

# (12) FASCICULE DE BREVET EUROPEEN

(45) Date de publication du fascicule du brevet : **13.03.91 Bulletin 91/11**

(51) Int. Cl.$^5$ : **G01N 21/59**

(21) Numéro de dépôt : **88400871.5**

(22) Date de dépôt : **12.04.88**

(54) **Procédé et dispositif de mesure par réflexion du coefficient de transmission optique d'une paroi vitreuse teintée.**

(30) Priorité : **14.04.87 FR 8705272**

(43) Date de publication de la demande : **19.10.88 Bulletin 88/42**

(45) Mention de la délivrance du brevet : **13.03.91 Bulletin 91/11**

(84) Etats contractants désignés : **DE ES FR GB IT SE**

(56) Documents cités :
**DE-A- 3 345 897**
**US-A- 1 848 874**
**US-A- 4 125 328**

(73) Titulaire : **JAEGER**
**2, rue Baudin**
**F-92303 Levallois-Perret (FR)**

(72) Inventeur : **Feppon, Philippe**
**5, rue de Seyssel**
**F-74000 Annecy (FR)**
Inventeur : **Rydel, Charles**
**70, rue d'Aubervilliers**
**F-75019 Paris (FR)**

(74) Mandataire : **Martin, Jean-Jacques et al**
**Cabinet REGIMBEAU 26, Avenue Kléber**
**F-75116 Paris (FR)**

**EP 0 287 448 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à un procédé et à un dispositif de mesure par réflexion du coefficient de transmission optique d'une paroi vitreuse teintée.

De manière habituelle, la mesure du coefficient de transmission optique d'une paroi vitreuse est effectué par mesure directe du rapport du flux d'un rayonnement électromagnétique transmis par cette paroi au flux du rayonnement électromagnétique incident engendrant celui-ci. Un tel procédé est utilisé dans le dispositif décrit dans le document DE-A-3345897.

Cependant, il est dans ce but nécessaire que les moyens émetteurs du rayonnement électromagnétique incident et les moyens récepteurs du rayonnement électrique transmis soient disposés de part et d'autre de la paroi vitreuse à étudier. Dans le cas où la paroi vitreuse constitue une paroi de séparation entre deux milieux, l'un des milieux étant soumis à des conditions d'intempéries et/ou d'environnement sévères, l'autre milieu constituant un milieu ou une enceinte protégée comme dans le cas où la paroi vitreuse constitue le parebrise d'un véhicule automobile ou d'un aéronef, et où en outre il est nécessaire de déterminer périodiquement le coefficient de transmission optique de cette paroi vitreuse en vue d'assurer un fonctionnement optimum d'accessoires de conduite ou de pilotage, tels que détecteurs de brouillard ou analogues, nécessitant la connaissance précise du coefficient de transmission de la paroi vitreuse considérée, ces systèmes courants ne peuvent être facilement utilisés. En effet, ils impliquent l'installation de moyens récepteurs dans le milieu extérieur ou soumis aux conditions d'environnement sévères, ce qui bien entendu augmente considérablement le coût de leur mise en oeuvre.

La présente invention a pour objet de remédier aux inconvénients précités par la mise en oeuvre d'un procédé et d'un dispositif de mesure par réflexion du coefficient de transmission optique d'une paroi vitreuse.

Un autre objet de la présente invention est la mise en oeuvre d'un procédé et d'un dispositif de mesure par réflexion du coefficient de transmission d'une paroi vitreuse dans lequel l'ensemble de l'appareillage utilisé est situé d'un même côté de la paroi vitreuse, dans le milieu protégé.

Un autre objet de la présente invention est également la mise en oeuvre d'un procédé et d'un dispositif permettant lors du changement de la paroi vitreuse constituant parebrise d'un véhicule automobile ou d'un aéronef de déterminer directement le coefficient de transmission par réflexion de cette paroi vitreuse en vue d'assurer la commande correspondante d'accessoires du véhicule ou de l'aéronef dont le fonctionnement dépend de la valeur du coefficient de transmission précité.

Un autre objet de la présente invention est également la mise en oeuvre d'un procédé et d'un dispositif permettant, lors de l'existence d'une paroi vitreuse de teinte et/ou d'opacité variable en fonction de la luminosité ambiante, un contrôle correspondant d'accessoires du véhicule ou de l'aéronef dont le fonctionnement dépend de la valeur du coefficient de transmission précité en fonction de la teinte et/ou de l'opacité de celle-ci.

Le procédé de mesure par réflexion du coefficient de transmission optique d'une paroi vitreuse teintée objet de la présente invention consiste à émettre un rayonnement électromagnétique incident vers la paroi vitreuse teintée, à détecter et mesure l'amplitude du rayonnement électromagnétique réfléchi par la paroi vitreuse teintée, puis à comparer l'amplitude du rayonnement électromagnétique réfléchi à une pluralité de valeurs de référence de coefficient de réflexion étant représentative du coefficient de transmission de la paroi vitreuse teintée.

Le dispositif de mise en oeuvre du procédé objet de l'invention précité comporte des moyens d'émission d'un rayonnement électromagnétique de longueur d'onde déterminée vers la paroi vitreuse, des moyens de réception du rayonnement électrique réfléchi par la paroi vitreuse, ces moyens de réception délivrant un signal dont l'amplitude est représentative de l'amplitude du rayonnement électromagnétique réfléchi par la paroi vitreuse, des moyens de comparaison du signal représentatif de l'amplitude du rayonnement électromagnétique réfléchi par la paroi vitreuse à des valeurs de seuil de référence de coefficient de réflexion représentatives du coefficient de transmission de la paroi vitreuse.

Le procédé et le dispositif objets de l'invention seront mieux compris à la lecture de la description et à l'observation des dessins ci-après dans lesquels :

- la figure 1a est un schéma illustratif de la mise en oeuvre du procédé objet de l'invention,
- la figure 1b est un diagramme représentatif du coefficient de transmission optique T d'une paroi vitreuse en fonction de la longueur d'onde pour différentes teintes de la paroi vitreuse, teintes désignées comme teintes de base,
- les figures 2a et 2b représentent un schéma synoptique fonctionnel d'un dispositif permettant la mise en oeuvre du procédé, conformément à l'objet de l'invention.

Le procédé de mesure par réflexion du coefficient de transmission optique d'une paroi vitreuse teintée, objet de l'invention, sera tout d'abord décrit en liaison avec la figure 1a.

Conformément à la figure précitée, le procédé objet de l'invention consiste à émettre un rayonnement électromagnétique incident d'intensité donnée vers la paroi vitreuse teintée notée PV. Sur la figure 1a, l'intensité

du rayonnement incident est notée $\phi i$ et le rayonnement incident est noté 1. Le procédé objet de l'invention consiste également à détecter et à mesurer l'intensité notée $\phi r$ du rayonnement électromagnétique réfléchi par la paroi vitreuse teintée PV. Sur la figure 1a, on a représenté le rayonnement incident 1, lequel est partiellement réfracté en un rayonnemment 2 dans la paroi vitreuse PV, ce même rayonnement incident 1 étant partiellement réfléchi en un premier rayonnement réfléchi noté 5, cette réflexion intervenant sur le dioptre d'entrée de la paroi vitreuse PV, dioptre séparant le milieu noté I ou premier milieu, formant par exemple le milieu protégé, et le matériau constitutif de la paroi vitreuse PV. Le rayonnement réfracté 2 est lui-même soumis à une nouvelle réfraction sur le deuxième dioptre séparant la paroi vitreuse PV, du deuxième milieu noté II pour donner naissance au rayonnement transmis ou rayonnement émergeant noté 7 d'intensité $\phi T$. Le premier rayonnement réfracté 2 dans la paroi vitreuse PV donne également lieu à un rayonnement réfléchi noté 3, lequel est lui-même réfracté par le premier dioptre de séparation de la paroi vitreuse PV et du premier milieu noté I pour donner naissance à un deuxième rayonnement réfléchi noté 6. Bien entendu, des réflexions successives des rayonnements réfléchis par le deuxième dioptre puis par le premier dioptre, tel que le rayonnement 4 et autres rayonnements successifs peuvent être mis en évidence. Cependant, pour des raisons parfaitement justifiées, l'intensité de ces rayonnements réfléchis successifs peut être négligée. Ainsi, le rayonnement électromagnétique réfléchi d'intensité $\phi r$ est constitué pour l'essentiel par rayonnements réfléchis 5 et 6 précédemment décrits. Il constitue ainsi le rayonnement électromagnétique réfléchi par la paroi vitreuse teintée PV d'intensité $\phi r$.

Pour un angle d'incidence du rayonnement incident d'intensité $\phi i$, le rayonnement 1, et pour les deux dioptres séparant la paroi vitreuse PV des milieux I et II, les coefficients de réflexion k du premier et du deuxième dioptre sont sensiblement identiques pour l'incidence considérée.

Selon un aspect du procédé objet de l'invention, on a pu constater que pour des parois vitreuses PV de même nature, parois vitreuses telles que par exemple les parebrises en verre feuilleté pour véhicules automobiles, ces parois vitreuses présentent lorsqu'elles sont teintées différemment un indice de réfraction n sensiblement identique quelle que soit la teinte de la paroi vitreuse PV considérée. En conséquence, le coefficient de réflexion des dioptres d'entrée et de sortie, coefficient k, est sensiblement constant selon la teinte et généralement inférieur à 10%. Par contre, le coefficient de transmission T et le coefficient d'absorption a pour chacune des teintes considérées apparaissent très différents en fonction des teintes précitées.

Ainsi, pour des points A, B, situés sur le rayonnement électromagnétique 2, respectivement au voisinage du dioptre d'entrée et du dioptre de sortie de la paroi vitreuse PV et à l'intérieur de celle-ci, pour des points C, D situés au voisinage des points B et A, respectivement, sur le rayonnement électromagnétique 3 pour des points E et F situés respectivement sur le rayonnement électromagnétique 5 et 6, et pour un point G situé sur le rayonnement émergeant 7, il est possible d'écrire successivement les relations ci-après donnant les intensités correspondantes en fonction de l'intensité incidente $\phi i$ :

$$\text{pt A} : (1-k)\phi i$$
$$\text{pt B} : (1-k)(1-a)\phi i$$
$$\text{pt C} : k(1-k)(1-a)\phi i$$
$$\text{pt D} : k(1-k)(1-a)^2\phi i$$
$$\left.\begin{array}{l}\text{pt E} : k\,\phi i \\ \text{pt F} : k\,(1-k)^2\,(1-a)^2\phi i\end{array}\right\} = R\,\phi i$$
$$\text{pt G} : (1-k)^2\,(1-a)\phi i = T\,\phi i$$

Des relations précédentes, on peut déduire la relation reliant le coefficient de réflexion R de la paroi vitreuse PV, à son coefficient de transmission T en fonction du coefficient de réflexion k des dioptres d'entrée et de sortie :

$$R = k\left[1 + \frac{T^2}{(1-k)^2}\right]$$

On notera que pour une paroi vitreuse, illuminée par un rayonnement incident sous incidence sensiblement normale, le coefficient k de réflexion des dioptres d'entrée et de sortie est très inférieur à 1 et voisin de 4%.

Ainsi, lors d'un changement de teinte de la paroi vitreuse PV, k reste donc sensiblement constant et le coefficient de réflexion R de la paroi vitreuse PV est ainsi représentatif du coefficient de transmission optique T de celle-ci.

Ainsi que représenté de manière schématique en figure 1a, le procédé objet de l'invention consiste alors à comparer le rapport $R = \frac{\phi r}{\phi i}$ rapport de l'intensité du rayonnement électromagnétique réfléchi à l'intensité du rayonnement électromagnétique incident, ce rapport étant représentatif du coefficient de réflexion R de la paroi vitreuse PV, à une pluralité de valeurs de référence notée $R_{r1}$.... $R_{rn}$ de coefficients de réflexion. Chaque valeur de référence de coefficient de réflexion est représentative d'une valeur de coefficient de transmission $T_1$.... $T_n$ de parois vitreuses teintées de référence et il est ainsi possible de déterminer par identification le coefficient de transmission optique T de la paroi vitreuse PV.

Selon un autre aspect du procédé objet de l'invention, les valeurs de références $R_{r1}$ à $R_{rn}$ de coefficient de réflexion des parois vitreuses teintées de référence sont déterminées pour des teintes dites teintes de base correspondant aux teintes normalement utilisées de façon courante dans la fabrication de parois vitreuses de grande série telles que par exemple les parebrises de véhicules automobiles ou d'aéronefs.

Selon une autre caractéristique du procédé objet de l'invention, les valeurs de référence $R_{r1}$ à $R_{rn}$ de coefficient de réflexion des parois vitreuses teintées de référence sont comprises entre les valeurs de référence limites :

- 1 à 0,95 pour une paroi vitreuse claire,
- 0,69 à 0,64 pour une paroi vitreuse de teinte bronze,
- 0,45 à 0,40 pour une paroi vitreuse de teinte verte, pour un rayonnement dans le proche infrarouge.

Bien entendu, les plages de valeurs de référence des coefficients de réflexion précédemment citées pour chaque teinte tiennent compte des dispersions inévitables des valeurs de ces coefficients de réflexion pour une teinte considérée, en fonction des dispersions de fabrication.

Selon encore un autre aspect du procédé objet de l'invention tel que représenté en figure 1a, le rayonnement électromagnétique incident 1 est émis sous faible incidence et la détection de rayonnement électromagnétique réfléchi, rayonnements 5 et 6 est effectué symétriquement par rapport à la normale N à la paroi vitreuse PV.

Selon encore une autre caractéristique du procédé objet de l'invention, le rayonnement électromagnétique incident peut être émis en polarisation rectiligne, le vecteur polarisation P étant représenté en figure 1a. L'angle d'incidence du rayonnement incident 1 est alors choisi égal à l'incidence de Brewster pour la paroi vitreuse considérée. Bien entendu, et de façon non limitative, le rayonnement incident 1 étant émis en l'absence de polarisation rectiligne, mais sous incidence de Brewster pour la paroi vitreuse considérée, il est possible sans sortir du cadre du procédé objet de la présente invention d'assurer la détection du rayonnement électromagnétique réfléchi 5, 6, en polarisation rectiligne. Dans les deux cas, il est ainsi possible d'obtenir l'extinction du rayonnement électromagnétique 5 du rayonnement réfléchi par le dioptre d'entrée de la paroi vitreuse PV. Dans ce cas, le coefficient de réflexion R de la paroi vitreuse PV est lié au coefficient de transmission optique T de cette paroi vitreuse, par la nouvelle relation :

$$R = k\left(\frac{T^2}{(1-k)^2}\right)$$

Sur la figure 1b, on a représenté la loi de variation du coefficient de transmission optique T d'une paroi vitreuse PV, en fonction de la longueur d'onde du rayonnement électromagnétique exprimé en nanomètre pour différentes teintes de base de la paroi vitreuse et en particulier la teinte claire, la teinte bronze et la teinte verte. Pour chacune des teintes de base considérée, le maximum de transmission, l'axe vertical du graphe de la figure 1b étant gradué en valeur de transmission relative est obtenu pour une longueur d'onde correspondant sensiblement à 530 nanomètres. Pour une longueur d'onde du rayonnement électromagnétique correspondant à 900 nanomètres, soit pour une émission de ce rayonnement électromagnétique dans la zone infrarouge, les coefficients de transmission de paroi vitreuse de teinte claire, de teinte bronze et de teinte verte ont respectivement pour valeur 75%, 55% et 40% sensiblement. Ces différentes valeurs permettent ainsi de discriminer la teinte correspondante de la paroi vitreuse pour un coefficient de réflexion R de celle-ci.

Une description plus détaillée d'un dispositif permettant la mise en oeuvre du procédé objet de l'invention précédemment décrit en liaison avec les figures 1a et 1b sera maintenant donnée en liaison avec les figures 2a et 2b.

Conformément à la figure 2a précitée, le dispositif objet de l'invention permettant la mise en oeuvre du procédé précédemment décrit, comprend selon un mode de réalisation particulier non limitatif, des moyens 10

d'émission d'un rayonnement électromagnétique de longueur d'onde déterminée vers la paroi vitreuse PV. Le rayonnement électromagnétique incident est émis avec une intensité notée $\phi i$.

Le dispositif comporte en outre des moyens 20 de réception du rayonnement électromagnétique réfléchi d'intensité $\phi r$ dans la paroi vitreuse PV. Des moyens de réception 20 délivrent un signal dont l'amplitude est représentative de l'intensité $\phi r$ du rayonnement électromagnétique réfléchi par la paroi vitreuse PV. En outre, ainsi qu'on l'a représenté en figure 2a, des moyens 30 de comparaison du signal représentatif de l'intensité $\phi r$ du rayonnement électromagnétique réfléchi, ce signal délivré par les moyens de réception 20, étant également représentatif du coefficient de réflexion $R_r$ de la paroi vitreuse PV étudiée sont prévus, cette comparaison étant effectuée par rapport à des valeurs de référence de coefficient de réflexion $R_{r1}$ à $R_{rn}$, valeurs représentatives d'une valeur du coefficient de transmission T1 à Tn de parois vitreuses teintées de référence.

Ainsi que représenté de manière schématique en figure 2a, le moyen 10 d'émission du rayonnement électromagnétique comporte avantageusement une diode électroluminescente émettant dans le domaine de rayonnement infrarouge et de manière avantageuse à une longueur d'onde de 900 nanomètres. Aux moyens d'émission 10 sont associés des moyens de focalisation 100 et dans le cas de l'émission en lumière polarisée rectilignement, un filtre polariseur 101. Les moyens 20 de réception peuvent être constitués par une photodiode dont le domaine de sensibilité correspond à la diode d'émission constitutive des moyens 10 d'émission. Aux moyens d'émission 20 sont associés des moyens de focalisation 200 appropriés. De la même manière, en l'absence de filtre polariseur 101 à l'émission, un filtre analyseur 201 peut être ajouté et couplé aux moyens de focalisation 200. L'ensemble peut ainsi être contenu dans un boîtier noté 2000, lequel permet d'assurer la fixation des moyens d'émission et des moyens de réception à une distance convenable de la paroi vitreuse PV.

Bien entendu, les moyens 30 de comparaison du signal représentatif de l'intensité r du rayonnement électromagnétique réfléchi et du coefficient de réflexion Rr peuvent comporter, ainsi que représenté de manière schématique en figure 2a, un préamplificateur noté 301, lequel reçoit le signal délivré directement par les moyens 20 de réception du rayonnement électromagnétique. Le préamplificateur 301 délivre un signal amplifié à une première entrée d'un comparateur 302, lequel sur une pluralité d'entrée reçoit des tensions de référence notées $VR_1$ à $VR_n$, ces tensions de référence représentant bien entendu les valeurs correspondantes des coefficients de réflexion $R_{r1}$ à $R_{rn}$ représentatives d'une valeur du coefficient de réflexion $T_1$ à $T_n$ de parois vitreuses teintées de référence. La comparaison du signal amplifié délivré par le préamplificateur 301 à l'entrée du comparateur 302 permet par identification de déterminer le coefficient de transmission optique T de la paroi vitreuse étudiée.

Ainsi qu'on le remarquera en outre en figure 2a, les moyens d'émission 10 et de réception 20 du rayonnement électromagnétique sont faiblement inclinés par rapport à la normale N à la paroi vitreuse PV. De préférence, les moyens d'émission 10 et de réception 20 du rayonnement électromagnétique incident et réfléchi sont disposés symétriquement par rapport à la normale N précitée.

Un autre mode de réalisation des moyens de comparaison 30 du dispositif objet de l'invention tel que représenté en figure 2a, sera maintenant décrit en liaison avec la figure 2b.

Dans le mode de réalisation de la figure 2b, les moyens de comparaison 30 permettent d'engendrer un signal Vc proportionnel à la différence entre le rapport R représentatif du coefficient de réflexion de la paroi vitreuse PV et la valeur du coefficient de réflexion de référence $R_{r1}$ à $R_{rn}$ la plus proche. Cette différence est représentative du coefficient de transmission T de la paroi vitreuse PV. Ce mode de réalisation est plus particulièrement adapté dans le cas de parois vitreuses dont la teinte et en définitive le coefficient de transmission varie en fonction de la luminosité ambiante, de manière sensiblement continue en fonction de celle-ci.

Dans ce cas, le signal Vc délivré par les moyens de comparaison 30 constitue une échelle de valeurs continue du coefficient de transmission T de la paroi vitreuse PV.

Dans ce but, ainsi que représenté en figure 2b, le préamplificateur 301 est directement relié à un module d'échantillonnage du signal préamplifié et de conversion analogique numérique de ce signal. Le module d'échantillonnage et de conversion analogique numérique 303 est interconnecté à une unité de mémorisation 304 et d'autre part à une unité centrale de calcul notée 305. L'unité centrale de calcul peut avantageusement être constituée par un microprocesseur tel que le microprocesseur utilisé pour la gestion des fonctions de l'habitacle d'un véhicule automobile ou d'un aéronef. Selon une autre caractéristique, l'unité de mémorisation 304 peut être subdivisée en une zone mémoire vive A et une zone mémoire morte B. La zone mémoire vive A permet la mémorisation des valeurs numérisées du signal préamplifié, valeurs représentatives du coefficient de réflexion R de la paroi PV à étudier. La zone mémoire morte B comporte au contraire les valeurs des coefficients de réflexion de référence $R_{r1}$ à $R_{rn}$ représentatives soit d'une valeur du coefficient de transmission $T_1$, $T_n$ de parois vitreuses teintées de référence, ou représentatives pour une même teinte des différents coefficients de transmission de la paroi vitreuse PV dont l'absorption ou le coefficient de transmission varie en fonction de la luminosité ambiante.

L'unité centrale de calcul 305 comporte alors un programme microprogrammé permettant d'assurer la comparaison de la valeur mesurée du coefficient de réflexion R mémorisée en mémoire vive A de l'unité mémoire 304, avec les valeurs de référence mémorisées dans la zone mémoire morte B de cette même unité mémoire. Le programme de calcul permet alors d'effectuer toute interpolation de la valeur du coefficient de réflexion R mesuré par rapport à deux valeurs de coefficient de réflexion de référence $R_{r1}$ à $R_{rn}$, la différence par rapport à l'une ou à plusieurs de ces valeurs étant représentative du coefficient de transmission T de la paroi vitreuse PV.

En outre, les moyens de comparaison 30 comportent également une carte d'interface 306 reliée à une unité centrale de calcul 305, la carte d'interface 306 consistant en une carte de conversion numérique analogique délivrant le signal Vc précédemment cité.

Le comparateur tel que représenté en figure 2b peut bien entendu être mis en oeuvre à l'aide de composants normalement disponibles dans le commerce, et ne fera pas l'objet d'une description plus détaillée en ce qui concerne ces derniers.

Le mode de réalisation du comparateur et du dispositif objet de l'invention tel que représenté en figure 2b et 2a notamment peut être utilisé, le signal Vc délivré par les moyens comparateurs 30 permettant la commande de régulation de l'intensité du rayonnement électromagnétique d'un accessoire de véhicule automobile ou d'aéronef noté 31 sur la figure 2b. Dans ce cas bien entendu, la paroi vitreuse PV est constituée par le parebrise du véhicule ou de l'aéronef et l'accessoire 31 est constitué par un détecteur de brouillard par exemple, accollé au parebrise ou paroi vitreuse PV. Le signal Vc ainsi élaboré par le dispositif objet de l'invention permet en fonction soit de la teinte du parebrise, soit en fonction du coefficient de transmission de celui-ci de commander l'intensité d'émission d'un appareil détecteur de brouillard.

## Revendications

1. Procédé de mesure par réflexion du coefficient de transmission optique d'une paroi vitreuse teintée, caractérisé en ce qu'il consiste :
– à émettre un rayonnement électromagnétique incident d' intensité donnée $\phi i$ vers ladite paroi vitreuse teintée,
– à détecter et mesurer l'intensité $\phi r$ du rayonnement électromagnétique réfléchi par ladite paroi vitreuse teintée,
– à comparer le rapport $R = \frac{\phi r}{\phi i}$ de l'intensité dudit rayonnement électromagnétique réfléchi à l'intensité du rayonnement électromagnétique incident à une pluralité de valeurs de référence Rr1...Rrn de coefficients de réflexion, chaque valeur de référence de coefficient de réflexion étant représentative d'une valeur de coefficient de transmission T1...Tn de parois vitreuses teintées de référence pour déterminer par identification le coefficient de transmission optique T de ladite paroi vitreuse.

2. Procédé selon la revendication 1, caractérisé en ce que lesdites valeurs de référence Rr1, Rrn de coefficient de réflexion sont comprises entre les valeurs de référence limites :
– 1 à 0,95 pour une paroi vitreuse claire,
– 0,69 à 0,64 pour une paroi vitreuse de teinte bronze,
– 0,45 à 0,40 pour une paroi vitreuse de teinte verte, pour un rayonnement dans le proche infrarouge.

3. Procédé selon la revendication 1 ou 2, caractérisé en ce que ledit rayonnement électromagnétique incident est émis sous faible incidence, la détection du rayonnement électromagnétique réfléchi étant effectuée symétriquement par rapport à la normale N à la paroi vitreuse PV.

4. Procédé selon l'une des revendications précédentes, caractérisé en ce que ledit rayonnement électromagnétique incident est émis en polarisation rectiligne $\vec{P}$, sous incidence de Brewster.

5. Procédé selon l'une des revendications 1 à 4, caractérisé en ce que ledit rayonnement électromagnétique est un rayonnement infrarouge.

6. Dispositif de mise en oeuvre du procédé selon l'une des revendications précédentes, caractérisé en ce qu'il comporte :
– des moyens (10) d'émission d'un rayonnement électromagnétique de longueur d'onde déterminée vers ladite paroi vitreuse (PV),
– des moyens (20) de réception du rayonnement électromagnétique réfléchi par ladite paroi vitreuse, lesdits moyens de réception délivrant un signal dont l'amplitude est représentative de l'intensité $\phi r$ du rayonnement électromagnétique réfléchi par ladite paroi vitreuse PV,
– des moyens (30) de comparaison dudit signal représentatif de l'intensité $\phi r$ du rayonnement électromagnétique réfléchi et du coefficient de réflexion Rr par la paroi vitreuse PV à des valeurs de référence de

coefficient de réflexion Rr1...Rrn représentatives d'une valeur de référence du coefficient de transmission T1...Tn de parois vitreuses teintées de référence pour déterminer par identification le coefficient de transmission optique T de ladite paroi vitreuse.

7. Dispositif selon la revendication 6, caractérisé en ce que lesdits moyens d'émission (10) et de réception (20) du rayonnement électromagnétique sont faiblement inclinés par rapport à la normale N à ladite paroi vitreuse.

8. Dispositif selon la revendication 7, caractérisé en ce que lesdits moyens d'émission (10) et de réception (20) du rayonnement électromagnétique incident et réfléchi sont disposés symétriquement par rapport à la normale N à la paroi vitreuse PV.

9. Dispositif selon l'une des revendications 6 à 8, caractérisé en ce que lesdits moyens de comparaison (30) permettent d'engendrer un signal Vc proportionnel à la différence entre le rapport R représentatif du coefficient de réflexion de la paroi vitreuse PV et la valeur du coefficient de réflexion de référence Rr1...Rrn la plus proche, cette différence étant représentative du coefficient de transmission T de ladite paroi vitreuse PV.

10. Dispositif selon la revendication 9, caractérisé en ce que ledit signal Vc délivré par les moyens de comparaison constitue une échelle de valeurs continue du coefficient de transmission T de ladite paroi vitreuse PV.

11. Utilisation d'un dispositif selon l'une des revendications 6 à 10, caractérisé en ce que ledit signal délivré par les moyens comparateurs (30) est utilisé pour la commande de régulation de l'intensité du rayonnement électromagnétique d'un accessoire de véhicule automobile ou d'aéronef, ladite paroi vitreuse étant constituée par le parebrise du véhicule ou aéronef et l'accessoire étant constitué par un détecteur de brouillard (31).

**Ansprüche**

1. Verfahren zum Messen des optischen Transmissionskoeffizienten einer glasartigen gefärbten Wand durch Reflexion, dadurch **gekennzeichnet**, daß es :

– das Aussenden elektromagnetischer Strahlung, welche mit gegebener Intensität Φi einfällt, in Richtung auf die glasartige gefärbte Wand,

– das Erfassen und Messen der Intensität Φr der von der glasartigen gefärbten Wand reflektierten elektromagnetischen Strahlung,

– das Vergleichen des Verhältnisses $R = \frac{\phi r}{\phi i}$ der Intensität der elektromagnetischen Strahlung mit der Intensität der einfallenden elektromagnetischen Strahlung für eine Vielzahl von Referenzwerten Rr1...Rrn der Reflexionskoeffizienten, wobei jeder Referenzwert der Reflexionskoeffizienten einen Wert des Transmissionskoeffizienten T1...Tn von glasartigen gefärbten Referenzwänden darstellt, so daß durch Identifikation der optische Transmissionskoeffizient T der glasartigen Wand festgestellt werden kann, umfaßt.

2. Verfahren nach Anspruch 1, dadurch **gekennzeichnet**,daß die Referenzwerte Rr1, Rrn des Reflexionskoeffizienten zwischen den Grenz-Referenzwerten

– 1 bis 0,95 für eine durchsichtige glasartige Wand,

– 0,69 bis 0,64 für eine bronzefarbige glasartige Wand,

– 0,45 bis 0,40 für eine glasartige Wand grüner Farbe, bei einer Strahlung im Infrarotbereich, liegen.

3. Verfahren nach Anspruch 1 oder 2, dadurch **gekennzeichnet**, daß die einfallende elektromagnetische Strahlung unter einem geringen Einfallswinkel ausgestrahlt wird, wobei die Erfassung der reflektierten elektromagnetischen Strahlung symmetrisch in bezug auf die Normale N zur glasartigen Wand PV bewirkt wird.

4. Verfahren nach einem der vorangehenden Ansprüche, dadurch **gekennzeichnet**, daß die einfallende elektromagnetische Strahlung in Linearpolarisation $\vec{P}$ bei Einfall unter dem Brewster-Winkel ausgesendet wird.

5. Verfahren nach einem der Ansprüche 1 bis 4, dadurch **gekennzeichnet**, daß die elektromagnetische Strahlung eine Infrarotstrahlung ist.

6. Vorrichtung zum Durchführen des Verfahrens nach einem der vorangehenden Ansprüche, dadurch **gekennzeichnet**, daß sie :

– eine Einrichtung (10) zum Aussenden elektromagnetischer Strahlung vorgegebener Wellenlänge auf die glasartige Wand PV,

– eine Einrichtung (20) zum Empfangen der durch die glasartige Wand reflektierte elektromagnetische Strahlung, wobei die Einrichtung zum Empfangen ein Signal liefert, dessen Amplitude repräsentativ für die Intensität ϕr der von der glasartigen Wand PV reflektiertem elektromagnetischen Strahlung ist,

– eine Einrichtung (30) zum Vergleichen des für die Intensität ϕr der reflektiertem elektromagnetischen Strahlung repräsentativen Signals des Reflexionskoeffizienten Rr für die glasartige Wand PV bei Referenzwerten für den Reflexionskoeffizient Rr1...Rrn, welche repräsentativ für einen Referenzwert des Transmissionskoeffizienten T1...Tn von gefärbten glasartigen Referenzwänden sind, so daß durch Identifikation der optische Transmissionskoeffizient T der glasartigen Wand bestimmt werden kann, aufweist.

7. Vorrichtung nach Anspruch 6, dadurch **gekennzeichnet**, daß die Einrichtungen zum Aussenden (10) und zum Empfangen (20) der elektromagnetischen Strahlung in bezug auf die Normale N zur glasartigen Wand schwach geneigt sind.

8. Vorrichtung nach Anspruch 7, dadurch **gekennzeichnet**, daß die Einrichtungen zum Aussenden (10) und zum Empfangen (20) der einfallenden und reflektierten elektromagnetischen Strahlung symmetrisch in bezug auf die Normale N zur glasartigen Wand PV angeordnet sind.

9. Vorrichtung nach einem der Ansprüche 6 bis 8, dadurch **gekennzeichnet**, daß die Einrichtung zum Vergleichen (30) ermöglicht, ein Signal Vc zu erzeugen, welches proportional zur Differenz zwischen dem Verhältnis R, das repräsentativ für den Reflexionskoeffizienten der glasartigen Wand PV ist, und dem nächstliegenden Wert des Referenz-Reflexionskoeffizienten Rr1...Rrn ist, wobei diese Differenz repräsentativ für den Transmissionskoeffizienten T der glasartigen Wand PV ist.

10. Vorrichtung nach Anspruch 9, dadurch **gekennzeichnet**, daß das von der Vergleichseinrichtung gelieferte Signal Vc eine kontinuierliche Werteskala des Transmissionskoeffizienten T der glasartigen Wand PV bildet.

11. Verwendung einer Vorrichtung nach einem der Ansprüche 6 bis 10, dadurch **gekennzeichnet**, daß das von der Vergleichseinrichtung (30) gelieferte Signal zur Steuerung der Intensität der elektromagnetischen Strahlung eines Zubehörteiles für ein Kraftfahrzeug oder Luftfahrzeug verwendet wird, wobei die glasartige Wand durch die Windschutzscheibe des Kraftfahrzeugs oder Luftfahrzeugs gebildet ist und das Zubehörteil aus einem Nebeldetektor (31) gebildet ist.

## Claims

1. Method for the measurement of the optical transmission factor of a tinted glass panel by reflection, characterized in that it consists in :

– transmitting an incident electromagnetic radiation of given intensity Φi towards said tinted glass panel,

– detecting and measuring the intensity Φr of the electromagnetic radiation reflected by said tinted glass panel,

– comparing the ratio $R = \frac{\phi r}{\phi i}$ between the intensity of said reflected electromagnetic radiation and the intensity of the incident electromagnetic radiation with several reflection coefficient reference values Rr1...Rrn, each reflection coefficient reference value representing a transmission factor value T1...Tn of tinted glass reference panels, to determine the optical transmission factor T of said glass panel by identification.

2. Method according to claim 1 characterized in that said reflection coefficient reference values Rr1, Rrn are included within the limit reference values :

– 1 to 0.95 for a clear glass panel,

– 0.69 to 0.64 for a bronze-tinted glass panel,

– 0.45 to 0.40 for a green-tinted glass panel, for radiation in the near infrared.

3. Method according to claim 1 or 2 characterized in that said incident electromagnetic radiation is transmitted at low incidence, the detection of the reflected electromagnetic radiation being done symmetrically with respect to the normal N to the glass panel PV.

4. Method according to one of the preceding claims characterized in that said incident electromagnetic radiation is transmitted in plane polarization $\vec{P}$ at the Brewster angle.

5. Method according to one of the claims 1 to 4 characterized in that said electromagnetic radiation is an infrared radiation.

6. Device for the implementation of the method according to one of the preceding claims, characterized in that it comprises :

– means (10) for transmission of an electromagnetic radiation of a determined wavelength towards said glass panel PV,

– means (20) for reception of the electromagnetic radiation reflected by said glass panel, said reception means delivering a signal with an amplitude representative of the intensity ϕr of the electromagnetic radiation reflected by said glass panel PV,

– means (30) for comparison of said signal, representing the intensity ϕr of the reflected electromagnetic radiation and the coefficient of reflection Rr by the glass panel PV with reflection coefficient reference values Rr1...Rrn, representative of a reference value of the transmission factor T1...Tn of tinted glass reference panels, to determine the optical transmission factor T of said glass panel by identification.

7. Device according to claim 6 characterized in that said electromagnetic radiation transmission means (10) and reception means (20) are slightly inclined with respect to the normal N to said glass panel.

8. Device according to claim 7 characterized in that said incident and reflected electromagnetic radiation transmission means (10) and reception means (20) are placed symmetrically with respect to the normal N to the glass panel PV.

9. Device according to one of the claims 6 to 8 characterized in that said means of comparison (30) can be used to create a signal Vc proportionate to the difference between the ratio R, representative of the reflection coefficient of the glass panel PV, and the closest value of the reference reflection coefficient Rr1... Rrn, this difference representing the transmission factor (T) of said glass panel PV.

10. Device according to claim 9 characterized in that said signal (Vc), delivered by the comparison means, constitutes a continuous scale of values of the transmission factor (T) of said glass panel PV.

11. Use of a device according to one of the claims 6 to 10 characterized in that said signal, delivered by the comparator means (30), is used to control regulation of the intensity of the electromagnetic radiation of a motor vehicle accessory or aircraft accessory, said glass panel being constituted by the windscreen of the motor vehicle or aircraft, and said accessory being constituted by a fog detector (31).

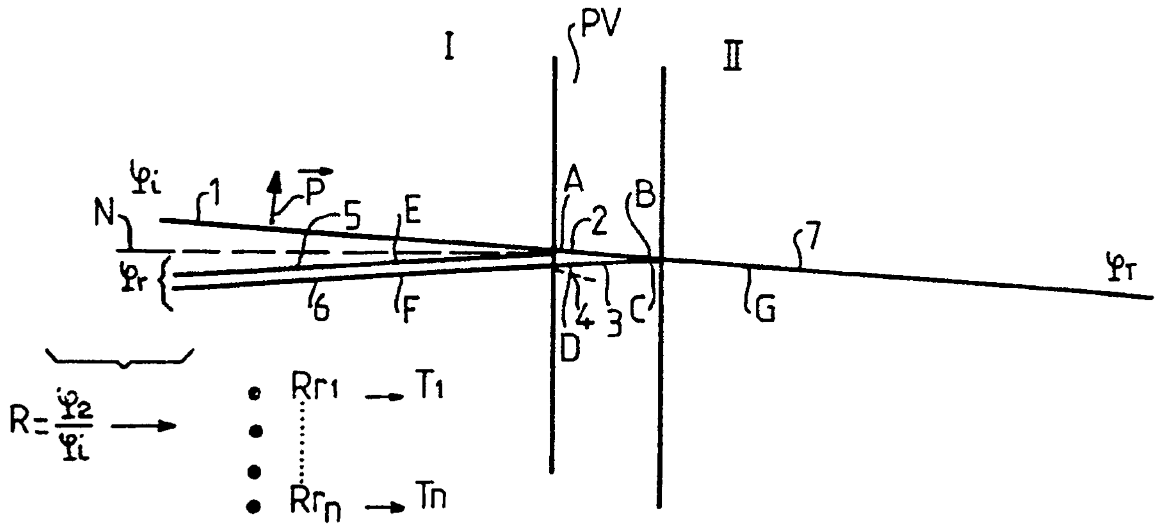
I
PV
II
N
1
P
5
E
A
2
B
7
6
F
4
3
C
D
G
R
Rr1 → T1
Rrn → Tn

FIG_1a

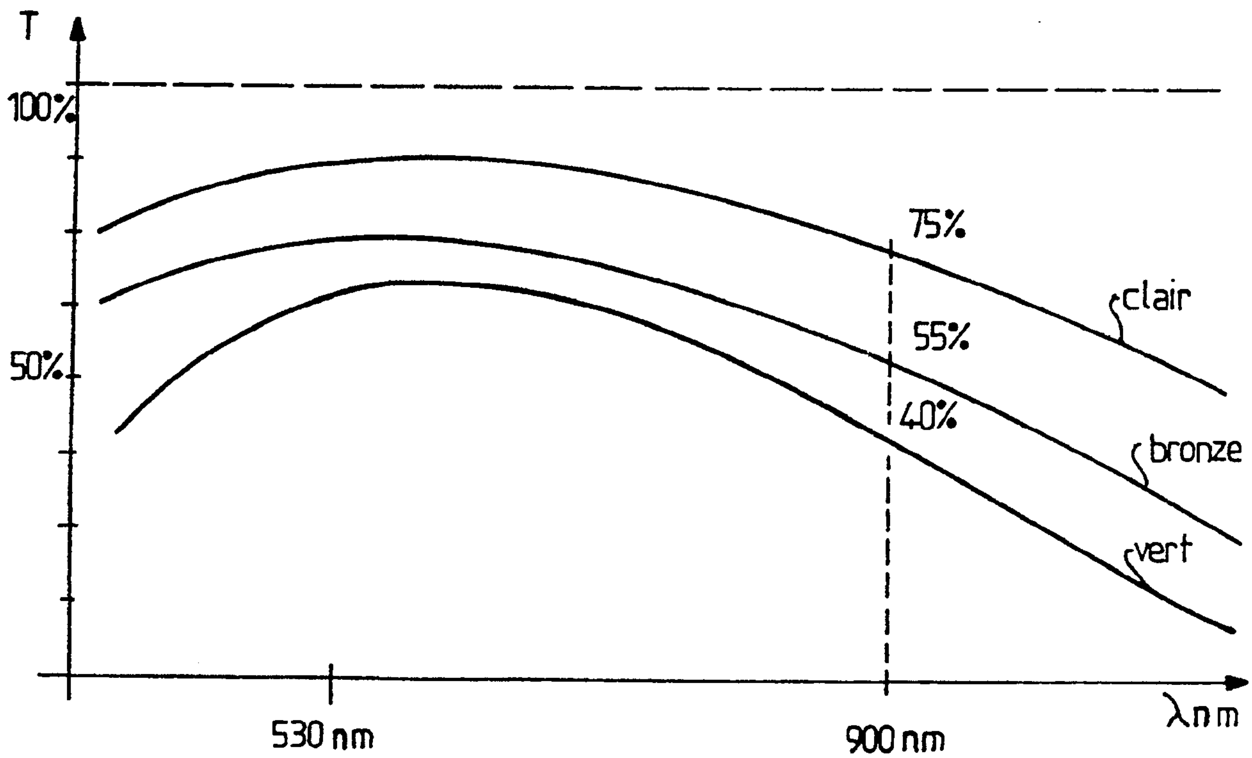
T
100%
50%
75%
clair
55%
bronze
40%
vert
530 nm
900 nm
λnm

FIG_1b

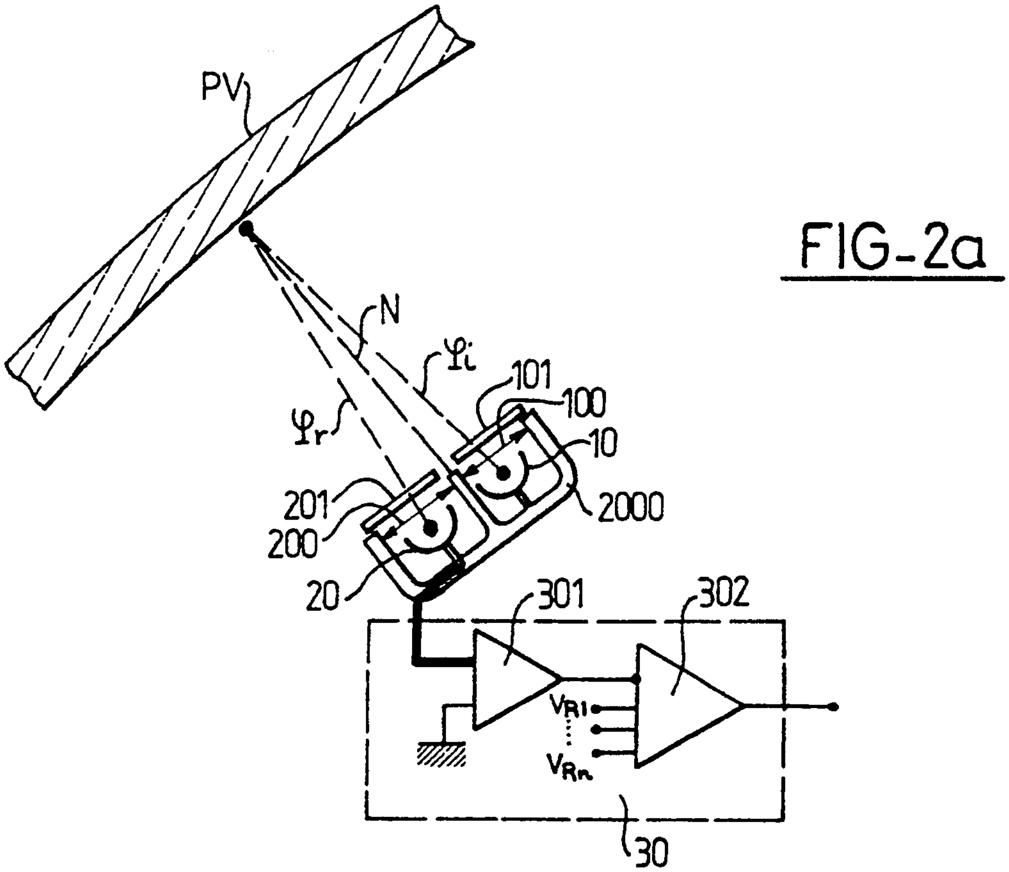
PV
N
φi
φr
101
100
10
2000
201
200
20
301
302
VR1
VRn
30

FIG-2a

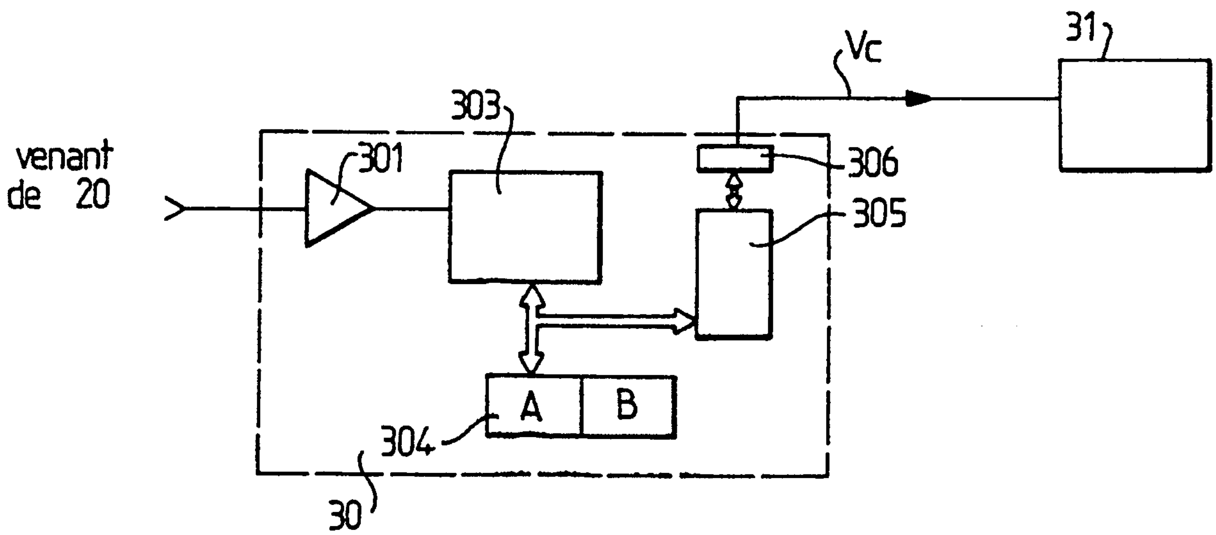
venant
de 20
301
303
Vc
31
306
305
A
B
304
30

FIG-2b